(19) Europäisches Patentamt
European Patent Office
Office européen des brevets

(11) **EP 4 220 565 A1**

(12) **EUROPEAN PATENT APPLICATION**

(43) Date of publication:
**02.08.2023 Bulletin 2023/31**

(21) Application number: **22154373.9**

(22) Date of filing: **31.01.2022**

(51) International Patent Classification (IPC):
*G06T 13/40* (2011.01)     *G10L 21/00* (2013.01)

(52) Cooperative Patent Classification (CPC):
**G06T 13/40; G10L 21/10; G10L 25/30;**
G10L 2021/105

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Microsoft Technology Licensing, LLC
Redmond, WA 98052-6399 (US)**

(72) Inventors:
• **CAMERON, Pashmina Jonathan
Cambridge (GB)**
• **MORRISON, Cecily, Peregrine Borgatti
Cambridge (GB)**

• **GRAYSON, Martin, Philip
Cambridge (GB)**
• **MASSICETI, Daniela
Cambridge (GB)**
• **JOHNSON, Matthew, Alastair
Cambridge (GB)**
• **RINTEL, Edward, Sean Lloyd
Cambridge (GB)**
• **FAIA MARQUES, Rita
Cambridge (GB)**

(74) Representative: **Townsend, Martyn et al
Page White & Farrer Limited
Bedford House
21A John Street
London WC1N 2BF (GB)**

(54) **METHOD, APPARATUS AND COMPUTER PROGRAM**

(57) A computer-implemented method comprising: receiving, from a user device, video data from a user; training a first machine learning model based on the video data to provide a second machine learning model, the second machine learning model being personalized to the user, wherein the second machine learning model is trained to predict movement of the user based on audio data; receiving further audio data from the user; determining predicted movements of the user based on the further audio data and the second machine learning model; using the predicted movements of the user to generate animation of an avatar of the user.

Figure 2A

EP 4 220 565 A1

**EP 4 220 565 A1**

**Description**

<u>Technical Field</u>

The present disclosure relates to a method, apparatus, and computer program for animating an avatar of a user. In particular, some examples relate to generating characteristic movements of a user that correspond to audio input from the user. In some examples, this can be used in communication sessions with other users.

<u>Background</u>

Users can use an avatar to represent themselves during communication with other users. Such avatars may be customized by the user to change the appearance of the avatar.

Avatars may be based on a user's appearance to provide a resemblance to the user. This allows a user to express their personality to other users.

When communicating with other users using only audio and an avatar created according to known methods, the user experience is degraded when compared to a video call. Characteristic movements of the user (e.g., facial movements, facial expressions, head pose) are lost when using a generic avatar to communicate as opposed to using a video or a user-specific avatar to communicate.

As well as visual appearance, the visual movements of avatars are also part of expressing a user's personality. Avatar movements may be enabled by animation derived from video or audio signals. For a given communication service, this animation may be generic for all users or customized to be unique for each user.

In prior art systems, when communicating with others using avatar that is animated only by audio signals, a person's visually characteristic facial, head, and/or body motion cannot be visually tracked to enable animation. The lack of visual movements by an avatar may degrade users' ability to express their own personality or perceive another user's personality.

In prior art systems, avatars animated only by audio signals may have visual movement animations ranging from the very simple, such as mouth flapping with no other motion, through to full motion. The mapping of sound to movements may be artificial (that is, unrelated to the sound except that the sound is present or absent), or based on a generic model (that is, using some known sounds to animate some known movements, such as rounding the mouth during an "O" sound), or some combination thereof. Current audio-driven animations focus on mouth or mouth and facial expression. Other head and or body motion tends to be absent or wholly artificial and generic to all users of a service.

<u>Summary</u>

According to a first aspect disclosed herein, there is provided a computer-implemented method. The method comprises receiving, from a user device, video data from a user. The method further comprises training a first machine learning model based on the video data to produce a second machine learning model, the second machine learning model being personalized to the user, wherein the second machine learning model is trained to predict movement of the user based on audio data. The method also comprises receiving further audio data from the user and determining predicted movements of the user based on the further audio data and the second machine learning model. The method also comprises using the predicted movements of the user to generate animation of an avatar of the user.

According to a second aspect disclosed herein, there is provided an apparatus configured to carry out the method of the first aspect.

According to a third aspect disclosed herein, there is provided a computer-readable storage device comprising instructions executable by a processor for carrying out the method of the first aspect.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all the disadvantages noted herein.

<u>Brief Description of the Drawings</u>

To assist understanding of the present disclosure and to show how embodiments may be put into effect, reference is made by way of example to the accompanying drawings in which:

Figure 1 is a schematic block diagram of an example computing system for performing the method disclosed herein;

Figure 2A is a schematic diagram showing an example training phase of a model as disclosed herein;

Figure 2B is a schematic diagram showing an example personalization phase of a model as disclosed herein;

Figure 3 is a schematic diagram of example testing phase of a model as disclosed herein;

Figure 4 is a diagram showing an example method flow in accordance with embodiments disclosed herein; and

Figure 5 is an example user interface in accordance with embodiments disclosed herein; and

Figure 6 is an example neural network that may be used in examples as disclosed herein;

Figure 7 shows an example user device;

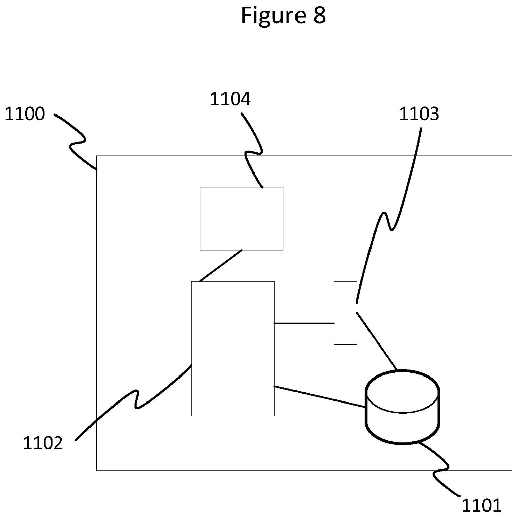

Figure 8 shows an example computing device; and

Figure 9 shows an example method flow.

Detailed Description

The present disclosure relates to a system, method, and computer-readable storage device for providing a user avatar that provides an authentic representation of the user by showing characteristic movements of the user. Such characteristic movements may comprise facial movements, facial expressions, and head pose of the user. In some examples, the user avatar may provide an identifiable likeness to the user by having a similar appearance to the user as well as showing the characteristic movements of the user.

An example application is for engaging one or more other users digitally or virtually, for example in a call or other form of communication session. The system can receive audio input from the user being represented by the avatar. Based on the audio input, the system may generate characteristic movements of the user which are used to drive the animation of the avatar to be displayed as the audio is output. When used during a call, this allows the one or more other users on the call to identify that the avatar is being used by the expected person based on their characteristic movements, as well as relate and fully engage with the avatar. This can reduce cases of stolen identity associated with avatar use during communication, and therefore increase security.

There are several reasons why a user may choose to be represented by an avatar during communication (e.g., a call) with one or more other users. For example, the user may not be in an appropriate environment to be recorded for a video call, and therefore may not wish for their actual appearance to be used during communication. Such reasons may include one or more of: the user may not have appropriate lighting; the user may not be appropriately dressed; the user may not wish to reveal their actual location that can be inferred from the background of the call due to privacy/security concerns.

A further situation where the use of an avatar for communication with other users can help a user is where the user has limited bandwidth and/or processing resources. Using an avatar instead of a video representation of the user can reduce the required bandwidth and/or require processing resources to carry out communication with other users compared to a situation where the user is represented by video. It may not be possible to record and transmit a video feed of the user to other users, but the use of an avatar may allow an option for a representation of the user to be displayed at a lower bandwidth or with lower required processing resources. For example, a scenario where a user is about to board a train can be considered. The user may be aware, or may be informed during the train journey, that they will not have sufficient bandwidth during the train journey to be represented by a video feed during the train journey. The user may then elect to be represented by avatar rather than by a video feed.

Further examples where avatars are used in Mixed Reality environments are also anticipated.

Embodiments of the invention improve a representation of a user by an avatar by representing characteristic movements of the user through the avatar. Such characteristic movements may include, for example, facial movements, facial expressions, and head pose. For example, during a mixed reality experience, as a user is represented by an avatar and audio from the user is output, predictions of how the user would move during the output audio can be made and represented by the avatar. For example, if the user would typically nod their head when enunciating certain phrases or speaking at a certain volume or intonation, this can be represented by the avatar. Facial movements may be considered to comprise movements of facial features e.g., eyebrow movements, forehead movements, mouth movements, nose movements, eye movements, etc. A head pose may be considered to comprise: an angle of roll; an angle of pitch; an angle of yaw. This provides an orientation of the head. As such, there are three degrees of freedom of movement for a head pose. According to some examples, each of the angle of roll, the angle of pitch and the angle of yaw may have a respective limit to represent a limit of neck flexibility of the avatar.

By representing characteristic appearance and movements of a user during communication with other users, a more inclusive avatar experience can be provided. Characteristic movements of a user, in particular the user's face and head, can be captured and represented by the avatar. This provides an experience that represents a user according to the user's personality and user's culture, and allows any physical conditions (e.g., medical conditions, such as a tic) to be shown and represented. Such representation may be customized by the user. This customization may allow a user to choose how they are represented by their avatar.

By representing characteristic movements of a user by using an avatar, an impression of the user's presence can be more accurately provided to other users during communication sessions (e.g., mixed reality experiences, video calls, etc.). This provides a more authentic experience to users during the communication session. It also provides a more secure communication, as users who know the person represented by the avatar and/or have previously spoken with them using the avatar can recognize the characteristic movements of the person represented by the avatar to be sure that they are communicating with that person, rather than someone else. Further, as described above, bandwidth and processing resources can be saved by using the avatar during communication sessions.

According to some examples, an avatar may be considered to comprise a visual digital representation of a user. The avatar may change pose during communication with other users. The pose changes may be made dependent on audio data received from the user being represented by the avatar. The pose changes may comprise changes in head position of the avatar. In some examples, an avatar may be based on a user's appearance. The avatar may be created based on image data corresponding to the user. In some examples, the image data may be used to create a mesh corresponding to a user's appearance and then image data may be used to overlay further details (e.g., skin, hair, makeup) onto the mesh to create an avatar corresponding to the user's appearance. The avatar may therefore represent a close likeness of the user. In some examples however, the user may choose to customize or change the appearance of the avatar such that the avatar does not represent a close likeness of the user. An avatar may be considered to comprise a virtual representation of a user. In some examples, the avatar may comprise a representation of the user from the shoulders up or from the neck up. As an example, mesh 212 may be proprietary geometry designed by a designer (e.g., an artist, etc.) and informed by three dimensional scans of human heads. However, any mesh representation of a head geometry can be used.

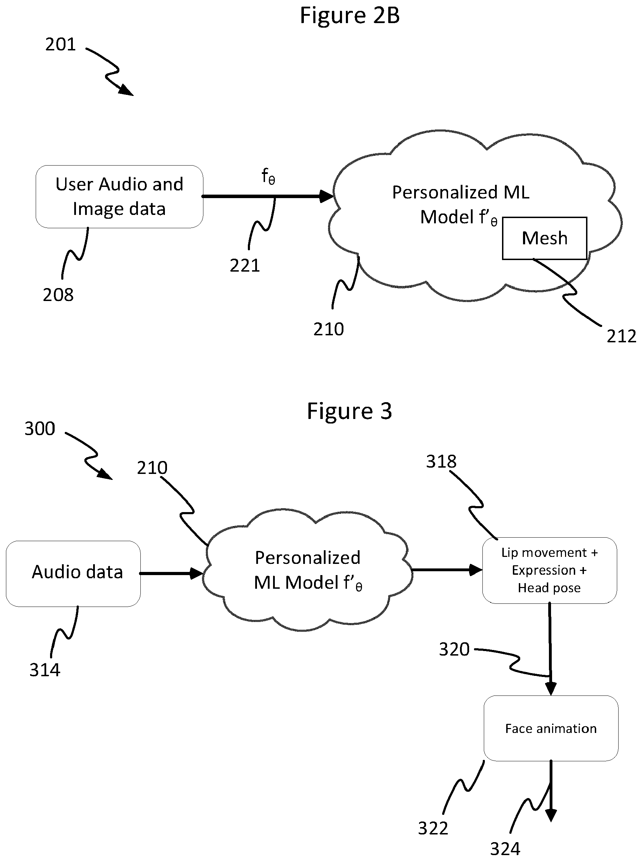

The appearance of the avatar may be based on mesh 212 using any known method. In some examples, mesh 212 may be based on a different, initial mesh that is fitted to correspond to the user's appearance. Texture models may also be overlaid over the mask to provide an avatar corresponding to the user's appearance. Example methods for fitting 3D models are discussed, for example, in US11127225B1 "Fitting 3D models of composite objects". In some examples, the appearance of the avatar of the user may be determined separately to the method of Figure 2B. In some examples, the appearance of the avatar may be determined during the process of Figure 2B, based at least in part on image data received in audio and image data 208. In some examples, the avatar provides a close representation of the user, such that a similarity is provided between the user appearance and the avatar appearance. As discussed further below, in some examples the avatar appearance determined at this stage may be later customized by a user.

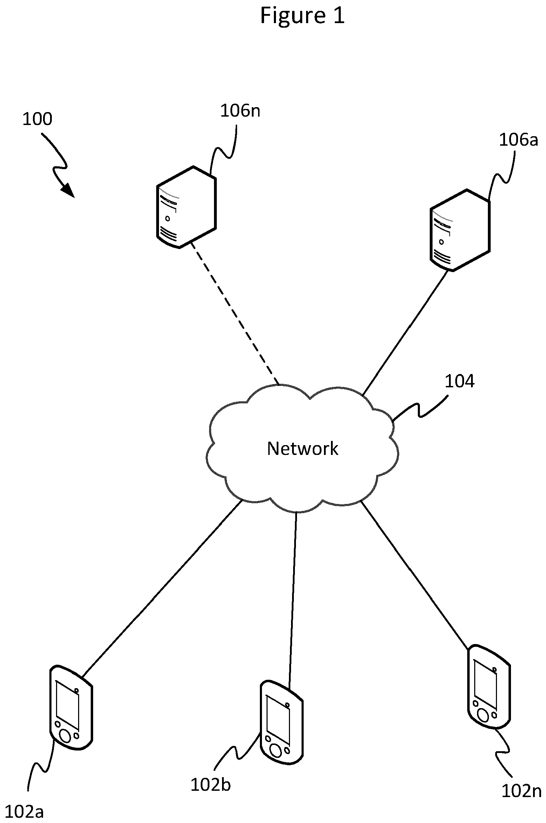

Figure 1 shows an example system 100 that may be used to implement some examples of the invention. It will be appreciated that system 100 is not limited to only the apparatuses shown in Figure 1. The avatar modelling system may be accessed by each of the devices in system 100 and may be hosted over one or more devices in system 100.

User device 102a may comprise any suitable user device for using an avatar modelling application. For example, user device 102 may comprise a mobile phone, smartphone, head mounted device (HMD), smart glasses, smart wearable technology, laptop, tablet, HoloLens, etc.

User device 102a may communicate with one or more other user devices 102b to 102n over network 104. In some examples, the one or more other user device may communicate directly without using network 104 (e.g., using Bluetooth technology). Network 104 may comprise any suitable network, for example an Internet network, an internet of things (IoT) network, a Local Area Network (LAN), a 5G network, a 4G network, a 3G network, etc. A user of user device 102a may be represented by an avatar when communicating with one or more of user devices 102b to 102n.

User device 102a may be used to receive audio data and corresponding image data of a user. In some examples, the image data and audio data may comprise a video. Video data may comprise audio data synchronized with image data. In some examples, the audio data and video data of the user may be captured directly using audio receiving equipment (e.g., a microphone) and image receiving equipment (e.g., a camera) of user device 102a. In some examples, the video data of the user may be downloaded or uploaded to user device 102a. video data of the user may be used by a machine learning (ML) model to learn how a user moves when communicating. For example, a user may make certain facial movements or facial poses when discussing certain subjects, saying certain words, making certain noises (e.g., laughing, crying), using certain intonations, increasing the volume of their speech, or decreasing the volume of their speech. User device 102a may also be configured to receive audio data without corresponding image data.

One or more ML models may be implemented at user device 102a or at one or more of computing device 106a and computing device 106n. Each of computing device 106a and 106n may comprise one or more computing devices for processing information. Each computing device may comprise least one processor and at least one memory, as well as other components. In some examples, one or more of computing devices 106a, 106n may be hosted in cloud such that one or more computing devices 106a, 106n comprise cloud computing devices.

In some examples, one or more ML models may be implemented over a combination of one or more of user device 102a, computing device 106a, computing device 106n. In some examples, the training of an ML model may take place at user device 102a. In some examples, the training of an ML model may take place at computing device 106a. In some examples, the training of an ML model may take place in part at user device 102a and in part at computing device 106a. In some examples, it may be useful for the training of an ML model to take place at least in part at computing device 106a when user device 102a is low-powered or has limited resources. One or more ML models as described herein may be implemented in the cloud or at a user device for reasons of scale - for example, in the case of a broadcast, lecture or game show (1v100/quiz show etc.) where many participants are watching a small number of animated avatars such as the lecturer, actor, game show participant, it may be useful to generate avatar animation at a cloud device. When bandwidth is limited or there is greater symmetry of participant interaction and/or hardware (such as meetings), the animation could happen at a user device or some variations of the two schemes. There are also scenarios where different participants of the same meeting may choose local or cloud compute based on their preference and indeed scenarios where part of the animation happens in the cloud and remaining part happens on the device.

Once an ML model has been trained that can predict a user's movement during communication based on audio data, the ML model can be used to predict user movement and animate an avatar accordingly during communication. In some examples, the ML model may be used to generate avatar movements at user device 102a. In some examples, the ML model may be used to generate avatar movements at computing device 106a. In some examples, the ML model may be used to generate avatar movements in part at user device 102a and in part at computing device 106a. In some examples, it may be useful for generation of avatar movements to take place at least in part at computing device 106a when user device 102a is low-powered or has limited resources.

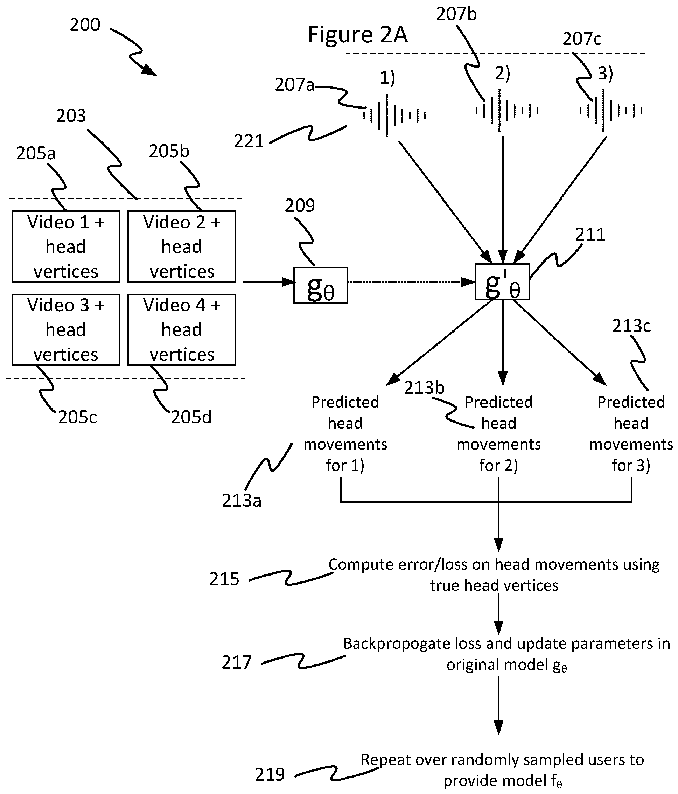

Figure 2A describes an example method 200 of training a base model. The example method that can be used to determine a a 'base' model $f_\theta$ that is considered 'personalizable' for a particular user. Base model $f_\theta$ is trained (or meta-trained) on a pre-existing training dataset. The pre-existing dataset will have many users, each with one or more corresponding videos of the user talking. In some examples, the one or more corresponding videos for each user will comprise a small number of videos for each user. In some examples, the small number of videos may be between 1 and 5. Each of the videos of the training dataset will have head vertices labelled. Each of the videos may comprise audio data synchronized with image data.

In general, during a training (or meta-training) for providing base model $f_\theta$ a big dataset of users is used, each with a one or more videos of the user, where each of the videos have labelled vertices of the user's face. These videos are input into a generic (not personalized) model $g_\theta$ 209 that takes in audio and image (video) and outputs corresponding head pose and movements. By doing this over a large dataset, the model $f_\theta$ that is provided knows 'how to personalize' - i.e., once it is deployed, the base model $f_\theta$ can be given just a few videos of a completely new user and will know what to do with those videos in order to become personalized to that user. As such, base model $f_\theta$ can be considered a personalizable model. Base model $f_\theta$ can then be used to provide personalized avatar movement to any new user with just a few videos of them. In some examples, base model $f_\theta$ may be considered to comprise a "first" ML model. In some examples, model $g_\theta$ 209 may be considered to comprise a "third" ML model.

While the above paragraphs describe a general method for determining a base model $f_\theta$, a specific method for determining a base model $f_\theta$ will now be considered with respect to Figure 2A. Figure 2A shows a specific example of a method 200 for determining a 'base' model $f_\theta$ that is considered 'personalizable' at the end of training. While Figure 2A shows an example of how personalizable model $f_\theta$ 209 may be determined, it will be appreciated that other suitable methods may be used.

Dataset 203 for a first user may be sampled randomly from the training dataset. Dataset 203 may comprise a first video 205a, second video 205b, third video 205c and fourth video 205d. Each of the first video 205a, the second video 205b, the third video 205c and the fourth video 205d may have vertices of the user's head labelled. Each of the first video 205a, the second video 205b, the third video 205c and the fourth video 205d may correspond to the same user. Dataset 203 may be considered to comprise a "context dataset" for the first user. In other examples, dataset 203 may comprise more or fewer videos than the four videos shown in Figure 2A. Dataset 203 is for the same user as dataset 221 comprising audio track 1) 207a, audio track 2) 207b and audio track 3) 207c. Dataset 221 may also comprise a corresponding video for each of audio track 1) 207a, audio track 2) 207b and audio track 3) 207c. Dataset 221 may be considered to comprise a "target dataset" for the same user as the context dataset 203.

Model $g_\theta$ 209 comprises a neural network used to predict user head movements. Model $g_\theta$ 209 may, in some examples, be initially set based on a prediction of head movements for multiple users while talking. Weights of model $g_\theta$ 209 may be initialized with default values. Weights of model $g_\theta$ 209 may be initialized with user-defined values.

Context dataset 203 is used to update weights of model $g_\theta$ 209 to provide updated model $g'_\theta$ 211 which is adapted to a specific user using the context dataset 203. In some examples, context dataset 203 is used to update weights of model $g_\theta$ 209 so that model EQ 209 can generate head movement of an avatar based on an audio track of a video. The difference between the movement of the head vertices and the video corresponding to the audio track user can then be minimized to provide a difference between head vertices of a model avatar during movement. This can be performed for each video 205a, 205b, 205c and 205d in context dataset 203 to provide updated model $g'_\theta$ 211 which is adapted to the specific user shown in the context dataset 203. In some examples, model $g'_\theta$ may be considered to comprise a "fourth" ML model.

Updating model $g_\theta$ 209 provides an updated model $g'_\theta$ 211 that is adapted to the specific user shown in the context dataset 203. Target dataset 211 comprising audio track 1) 207a, audio track2) 207b and audio track 3) 207c is then fed into updated model $g'_\theta$ 211. It should be noted that target dataset 211 may comprise more or fewer audio tracks than the three shown in the example of Figure 2A. Updated model $g'_\theta$ 211 then uses input audio track 1) 207a to provide predicted head movements for input audio track 1) 213a, input audio track 2) 207b to provide predicted head movements for input audio track 2) 213b and input audio track 3) 207c to provide predicted head movements for input audio track 3) 213c.

At 215, predicted head movements 213a, 213b and 213c are compared with videos corresponding to each of the audio tracks 1), 2) and 3). The comparison may be based on true vertices of the user's head labelled in the video and vertices of the head movements predicted in 213a, 213b and 213c. The error is computed based on the predicted head movement for audio track 1) 213a and a video corresponding to audio track 1) 207a. Error/loss is similarly calculated for predicted head movements for audio track 2) 213b and predicted head movements for audio track 3) 213c.

At 217, the error computed at 215 is used to backpropagate and update the parameters in original model $g_\theta$ 209. This can be performed, for example, using the gradient descent algorithm such that the error is minimized at 217 for the user of dataset 203 and dataset 221.

At 219, the process of 203 to 217 is repeated over many randomly selected users in the training dataset to provide a personalizable base model $f_\theta$. In some examples, the process of 203 to 217 is repeated for randomly sampled users until the error has converged from one user to the next user in the sample.

Figure 2B shows an example personalization phase using system 201 to provide a personalized model $f'_\theta$ 210 for a particular user that can predict the user's characteristic movements during communication (e.g., during conversation). The personalized ML model may be considered to comprise, in some examples, a "second" ML model.

System 201 may be implemented at a user device, at a computing device (e.g., a cloud computing device) connected to a network of the user device or implemented over a combination of a user device and a computing device. It may be useful to provide the personalization phase of system 201 at a computing device such as device 106a at least in part when the user device (e.g., user device 102a) is low-powered or has limited resources. System 201 comprises a personalizable base model $f_\theta$ that may be generated using a similar method as described above with respect to Figure 2A. In some examples, base model $f_\theta$ may be stored on a user device (e.g., user device 102a).

User audio data and image data 208 may comprise audio data of a user synchronized with image data showing one or more facial expressions of a user during communication. User audio data and image data 208 may be considered to comprise video data. For example, the image data may comprise one or more images showing the head poses and facial expressions corresponding with certain audio segments of the audio data.

In some examples, the audio and image data 208 may comprise one or more videos of the user speaking. Each video may comprise an audio track and synchronized moving image data.

User audio and image data 208 may be captured by image receiving equipment and audio receiving equipment of a user device e.g., of user device 102a. User audio and image data may also be downloaded or uploaded to user device 102a.

In some examples, to use an application of a user device such as user device 102a, a user may be required to provide a video of themselves talking to the application. For example, the application may require a 30-second clip of them talking. This video can be used to provide user audio and image data 208.

Based on the user audio and image data 208 and personalizable base model $f_\theta$ at operation 221 a personalized model $f'_\theta$ 210 is prepared for the user. Unlike the videos used in the training phase (e.g., in the method of Figure 2A), the audio and image data may not have head vertices labelled.

According to some examples, the personalized model $f'_\theta$ 210 is optimized using few-shot learning techniques. Example few-shot learning techniques may comprise:

- Finetuning approaches (e.g. How transferable are features in neural networks? Yosinski et al, 2014 CoRR abs/1411.1792 https://arxiv.org/abs/1411.1792)
- gradient based meta-learning approaches (e.g., Model-Agnostic Meta-Learning for Fast Adaptation of Deep Networks, Finn et al., Proceedings of the 34th International Conference on Machine Learning, PMLR 70:1126-1135, 2017);
- metric-based meta-learning approaches (e.g., ProtoNets such as those described in Prototypical Networks for Few-shot Learning, Snell et al., 19 June 2017); and
- model-based meta-learning approaches (e.g. CNAPs such as those described in Fast and Flexible Multi-Task Classification Using Conditional Neural Adaptive Processes, Advances in Neural Information Processing Systems 32 (2019) 7957-7968, Requiema et al., 2019).

Based on the audio data and image data 208, at 221 system 201 optimizes a personalized model $f'_\theta$ 210 for a user that can predict how a user's facial expression, head pose, and lip movement will change based on received audio input from the user. Personalized model $f'_\theta$ 210 can then be used to animate an avatar while a user is providing audio input as discussed below with respect to Figure 3. This can be used to communicate with other users in communication sessions (e.g., mixed reality experiences).

Operation 221 may comprise optimizing weights of a base model $f_\theta$ to provide a personalized model $f'_\theta$ 210 for a user. Personalized model $f'_\theta$ 210 can then be used to predict changes in head pose, changes in facial expression and lip movements for future audio input into the system as discussed below with respect to Figure 3. As the personalizable base model $f_\theta$ is trained to learn how to personalize a model according to input video data using methods as discussed above with respect to Figure 2A, when video data (user audio and image data 208) is input into the personalizable base model $f_\theta$ the personalizable base model $f_\theta$ can be personalized at 221 to provide personalized model $f'_\theta$ 210. Operation 221 may comprise few-shot learning techniques as disclosed herein.

Personalized model $f'_\theta$ 210 may also comprise a mesh 212 that corresponds to a user's face and can be used as an avatar. The mesh may be generated based on videos comprising images of a user's face. In some examples, mesh 212 may be generated during operation 221. In other examples, the mesh may be generated in a separate step based on images of the user. In other examples, mesh 212 may correspond to a preset mesh selected by the user. Mesh 212 may be two-dimensional or three-dimensional. Mesh 212 may be used to generate the avatar representing the user. Movements such as a change in head pose, a change in facial expression and lip movement may be used to move mesh 212.

Figure 3 shows an example of how an ML model $f'_\theta$ 210 can be used to predict a user's characteristic movements based on input audio. The method of Figure 3 can be considered to comprise an inference phase. In some examples, it may be useful for the inference phase to take place at least in part at computing device 106a when user device 102a is low-powered or has limited resources. The inference phase of System 300 may be implemented at a user device, at a computing device (e.g., a cloud computing device) connected to a network of the user device or implemented over a combination of a user device and a computing device. It may be useful to provide the inference phase of system 300 at a computing device such as device 106a at least in part when the user device (e.g., user device 102a) is low-powered or has limited resources.

Audio data 314 is input into the personalized model $f'_\theta$ 210. Audio data 314 and user audio and image data 208 may be from the same user. Audio data 314 may be different data to the audio data of audio and image data 208. Personalized model $f'_\theta$ 210 may have been trained previously as described herein, for example with respect to Figures 2A and subsequently Figure 2B. The audio data is then fed into personalized model $f'_\theta$ 210 to output predictions 318 of lip movement, expression and head pose of the user in dependence on the audio data.

Predictions 318 of lip movement, expression and head pose can be used at 320 to produce an avatar animation at 322. In examples, operation 320 may comprise one or more further actions based on the predicted lip movement, expression and head pose of a user. For example, it may be determined to not provide one or more of lip movement, changes in expression and changes in head pose when animating an avatar. This decision may be based on user input or may be set by the system based on processing constraints. Such user input may be provided by a user customizing the avatar animation. For example, a user may decide not to provide some changes in expression when a user has a condition such as Tourette Syndrome, for example. It may also be determined at 320 whether to animate an avatar or not. Further, shape parameters may be altered at 320 by a user to change the shape of the mesh underlying the avatar. In this way, a user may customize their avatar movements to represent their personality as they prefer.

At 322, an avatar and its respective animation is provided based on the predictions of 318 and the additional information received at 320.

At 324, the avatar and a respective animation of the avatar may be output to one or more of: a user device of the user represented by the avatar (e.g., user device 102a); a computing device (e.g., computing device 106a); a further user device belonging to a further user (e.g., user device 102b, 102n). The avatar and the respective amination may be output alongside audio data 314.

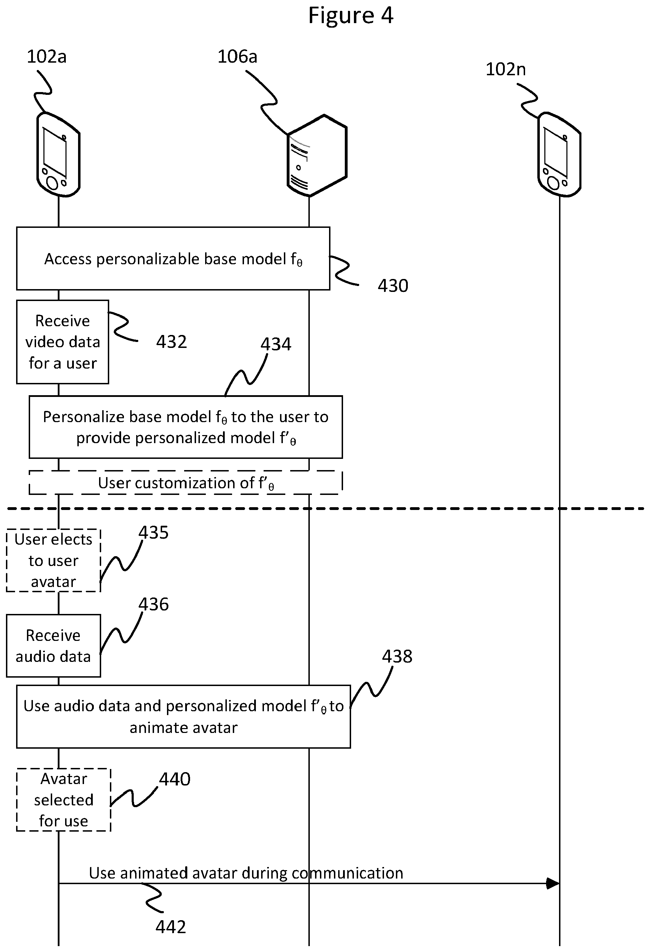

Figure 4 shows an example method flow between user device 102a, computing device 106a (which may comprise a cloud computing device) and user device 102n.

At 430, a personalizable base model $f_\theta$ is accessed by at least one of user device 102a and computing device 106a. The personalizable base model $f_\theta$ may have been generated as described above with respect to Figure 2A. The personalizable base model $f_\theta$ may be stored at least one of user device 102a and computing device 106a. In some examples, computing device 106a may send the personalizable base model $f_\theta$ to user device 102a. In some examples, user device 102a may send the personalizable base model $f_\theta$ to computing device 106a.

432 and 434 correspond to Figure 2A. At 432, user device 102a receives video data. This may be captured by user device 102a or may be uploaded or downloaded to user device 102a. The video data may comprise one or more videos. The videos may comprise audio data and synchronized image data. The videos may comprise videos of the user operating user device 102a.

At 434, a personalizable base model $f_\theta$ is personalized using the user's video data to provide a personalized model $f'_\theta$. This personalized model $f'_\theta$ will be able to predict the user's characteristic movements based on a future audio input from that user. As discussed above, the personalizable base model $f_\theta$ may be personalized at user device 102a, at computing device 106a or personalized over both of user device 102a and computing device 106a. 434 may comprise using few-shot learning techniques to provide personalized model $f'_\theta$.

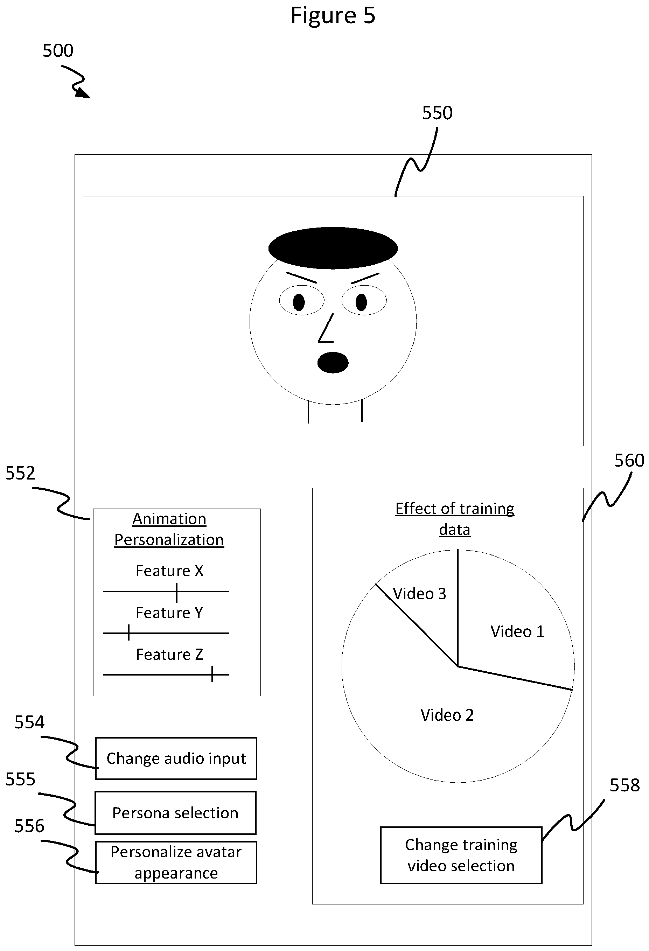

At 436, a user may optionally customize the personalized model $f'_\theta$ trained at 432. This is discussed further below with respect to Figure 5. Such customization may comprise including user-based constraints to personalized ML model $f'_\theta$. Some of the customization operations may be hosted at computing device 106a, in some examples. The selection of customization options is performed at user device 102a.

436, 438, 440 and 442 correspond to Figure 3. In some examples, a user may elect at 435 to use an avatar during a communication session before step 436. At 436, audio data is received, by user device 102a, from the user.

At 438, the audio data received at 436 is passed into the personalized model $f'_\theta$ and used to predict lip movements, changes in facial expression and changes in head pose corresponding to the audio data. As discussed above, this may be performed at user device 102a, at computing device 106a or performed over both of user device 102a and computing device 106a. The avatar may be further modified by the user by specifying other constraints at 438. In some examples, shape parameters of the avatar may be modified at 438.

In some examples, at 440, the avatar and animation corresponding to audio data received at 436 may be selected for use by the user.

At 442, the animated avatar may be used along with the audio data received at 436 to communicate with user 102n in a communication session. This could be in a video call (where the user of user device 102a is replaced by the avatar), in a mixed-reality environment or any other suitable communication session using a representation of the user of user device 102a alongside audio of the user.

Figure 5 shows an example user interface 500. It should be understood that user interface 500 is an example only, and fewer or more user options may be displayed to a user. It should also be understood that different layouts for user interface 500 may be provided. The user interface may be provided on a user device such as user device 102a.

At 550, a user can view their avatar's lip movement, changes in expression and changes in head pose when provided with an audio input. The audio input may be previously provided to the application running the user interface 500. The user may select to provide an alternative audio input at 554 so that the user can see how the avatar's lip movement, changes in expression and changes in head pose when provided with other audio inputs. The selection of option 554 may open a further menu allowing a user to select or provide further audio inputs.

At option 552, a user may be able to further customize the animation of their avatar. A user may be able to increase or decrease certain features or characteristic movements of the animation. As such, a user may vary a degree by which at least one of the predicted movements is performed. This could be useful where a user has a particular characteristic movement that they wish to accentuate or not show. As shown in the example of Figure 5, sliders could be used to increase and decrease these features or characteristic movements of the animation, however other options are also envisaged (e.g., providing a numerical value out of a certain threshold which the user can change for each feature). Although three features are shown in Figure 5, more or fewer features could be provided to the user. As an example, feature X could correspond to eyebrow movement, feature Y could correspond to head movement, and feature Z could correspond to an overall expressiveness of the avatar. These features and characteristic movements could be increased by at least one of: increasing a movement vector for the avatar when the user increases the feature or increasing a frequency with which the avatar performs the feature. Increasing a movement vector may comprise increasing an amount by which a feature of the avatar moves. For example, increasing a movement vector for eyebrow movements could comprise increasing a distance by which eyebrows move during avatar animation. In a further example, increasing an overall expressiveness of an avatar could comprise increasing the frequency with which the avatar moves during avatar animation. Option 552 could be used in some examples to dampen a twitch of a user if desired.

In some examples, a user of a user device receiving an animation of an avatar of another user (e.g., a user using user device 102n) is provided with options similar to those described with respect to 552 in order to scale up or down characteristic movements displayed to the receiving user.

In some examples, changes at option 552 can be reflected in corresponding changes to the underlying ML model (e.g., by changing weights of a neural network for the ML model). In some examples, changes at option 552 can be reflected by making changes to the avatar animation predicted by the underlying ML model without changing the ML model itself i.e., post-processing. This could include, for example, changing movement vectors for avatar movement predictions made by the ML model.

A user may have one or more different avatar personas. These personas may be based on different sets of corresponding image and audio data. In some examples the personas are further edited using personalization options such as the options shown at 552. In some examples, the personas could be based on the same corresponding image and audio data after different personalization by the user. A user may wish to have more than one persona for their avatar in different social settings. For example, the user may wish for an avatar to be used with friends to be more expressive and an avatar to be used in a work setting to be less expressive. By selecting option 555, a user can select different personas previously set up and stored for their avatar or can create a new persona. The personas may be stored for selection by the user as required.

At 556, a user can personalize their avatar's appearance. This could comprise adding accessories to the avatar, changing clothes, changing hairstyles, etc.

At 560, a user is presented with the effect of training data on the output avatar animation. Different portions of input image data and audio data may have differing levels of influence on the output avatar animation. In the example of Figure 560, a pie chart is used, by any other suitable illustration may be provided to the user (for example, a list of percentages for each video). In the example of Figure 5, three videos have been used (although it will be understood that in other examples, a different number of videos may be used). The portions of audio data and corresponding image data can therefore be considered to comprise the three videos. Video 2 has had a greater effect on the output avatar animation than videos 1 and 3. This indicates that video 2 is dominating training of the underlying ML model. This could be because, for example, video 2 is longer than videos 1 and 3, or because the user was more expressive during video 1 and 3. If a user is not happy with the way that their avatar is animated, a user may elect using option 558 to remove video 2. The user may also add further videos using this selection option. This option may be particularly useful if users have a medical condition that affects their communication and varies in intensity over different times.

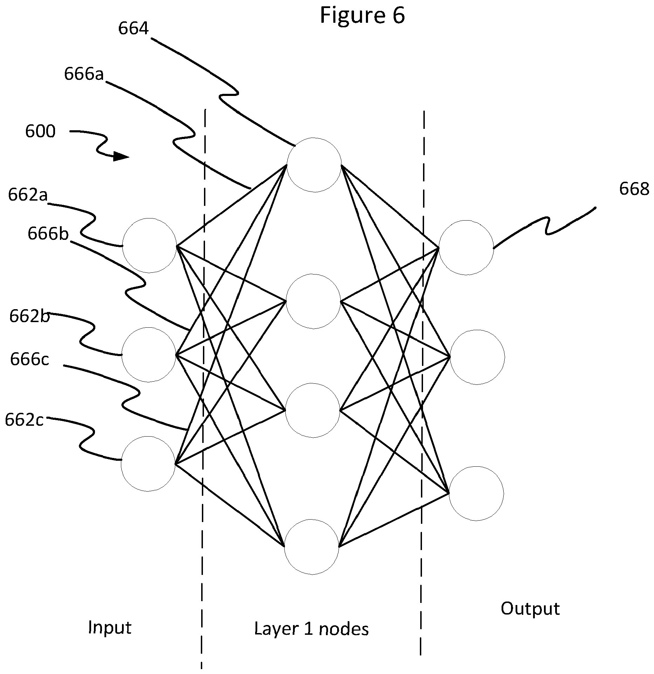

Figure 6 show an example neural network 600 that could be used in examples for any of neural networks $g_\theta$, $g'_\theta$, $f_\theta$, $f'_\theta$. It should be noted that the neural network is shown as an example only, and neural networks having different structures can be used in methods and systems as described herein. It should also be noted that neural networks having more layers and/or nodes may be used.

Each node (e.g., node 662a, node 662b, node 662c, node 664) of neural network 600 represents a floating-point value. Each edge (e.g., edge 666a, edge 666b, edge 666c, etc.) represents a floating-point value and is known as a "weight" or "parameter" of the model. These weights are updated as the model is trained according to the processes described above.

In this example of neural network 600, the input would be a 3-dimensional vector and the edges would be a 24-dimensional vector (12 edges connecting the input to layer 1, and 12 edges connecting layer 1 to the output).

In an example, to compute the value of a node in a given layer: take each node that is connected to it from the previous layer and multiply it by its associated edge value/weight, then add these together. A nonlinear function (e.g., a sigmoid, or tanh) is then typically applied to this value. This is repeated to get the value of each node in a given layer and is repeated for each layer until the output layer is reached.

In the example of neural network 600, the output is a 3-dimensional vector, which could represent the probability the model predicts that the input belongs to 3 possible object classes. In the example of neural network 600, the neural network has 1 hidden layer of nodes. In the case of a deep neural network which may be used in some examples as a neural network in the methods disclosed herein, there are typically more than 1 hidden layers.

Consider an example where the value of node 662a is $2=n_{11}$, the value of node 662b is $6=n_{12}$, the value of node 662c is $1=n_{13}$, the value of weight 666a is $1 = w_1$, the value of weight 666b is $4=w_2$, the value of weight 666c is $2=w_3$, and the value of node 664 is defined as:

$$n_{21} = \sigma \left( n_{11}\, w_1 + n_{12}\, w_2 + n_{13}\, w_3 \right) = \sigma \left( 2*1+6*4+1*2 \right) = \sigma \left( 2+24+2 \right) = \sigma \left( 28 \right).$$

In an example where $\sigma$ Is the tanh function, $n_{21}$ would equal 1. Similar equations could be used to determine other values of the neural network.

In the example of Figure 6, a three-dimensional input is input into neural network 600 and a three-dimensional output is provided. According to this example, the input may represent three dimensions of an audio input (e.g., three from any of: amplitude, frequency, pitch, intonation, metadata representing sentence structure, etc.) and the output may represent a three-dimensional spatial vector representing the pose of the user's head. If the pose of further facial components are used, such as pose of the lips, eyes etc., the dimension of the output may be increased. More or fewer elements of the audio input may also be accounted for by increasing or decreasing the dimension of the input.

It is emphasized that any neural network may be used as an ML model as disclosed herein and Figure 6 is shown as an example only. For example, any of the following may be used: sequential variational autoencoders (VAEs); convolutional neural networks; generative models; discriminative models; etc..

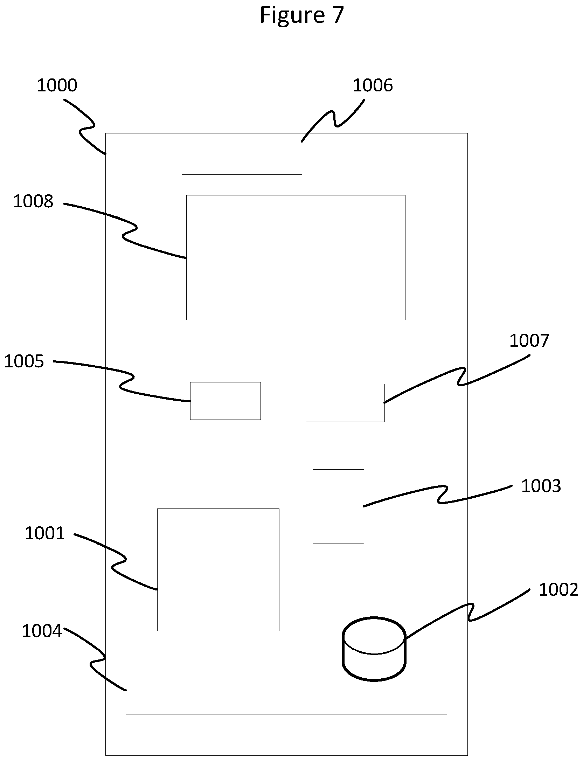

An example wireless communication device will now be described in more detail with reference to Figure 7 showing a schematic view of a communication device 1000. Such a device may include for example, one or more of: user device 102a; user device 102b; user device 102n. An appropriate communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A wireless communication device may be for example a mobile device, that is, a device not fixed to a particular location, or it may be a stationary device. The wireless device may need human interaction for communication or may not need human interaction for communication.

The wireless device 1000 may receive signals over an air or radio interface 1007 via appropriate apparatus for receiving and may transmit signals via appropriate apparatus for transmitting radio signals. In Figure 7, transceiver apparatus is designated schematically by block 1006. The transceiver apparatus 1006 may be provided, for example, by means of a radio part and associated antenna arrangement. The antenna arrangement may be arranged internally or externally to the wireless device.

A wireless device is typically provided with at least one data processing entity (e.g., a processor) 1001, at least one memory 1002 and other possible components 1003 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 1004. The user may control the operation of the wireless device by means of a suitable user interface such as keypad 1005, voice commands, touch sensitive screen or pad, combinations thereof or the like. A display 1008, a speaker and a microphone can be also provided. Furthermore, a wireless communication device may comprise appropriate connectors (either wired or wireless) to other devices and/or for connecting external accessories, for example hands-free equipment, thereto. The communication devices 1002, 1004, 1005 may access the communication system based on various access techniques. User device 1000 may be connectable to one or more networks such as network 104 to receive and/or transmit information. Such networks may include internet networks for example. Communication device 1000 may comprise equipment for recording video and audio.

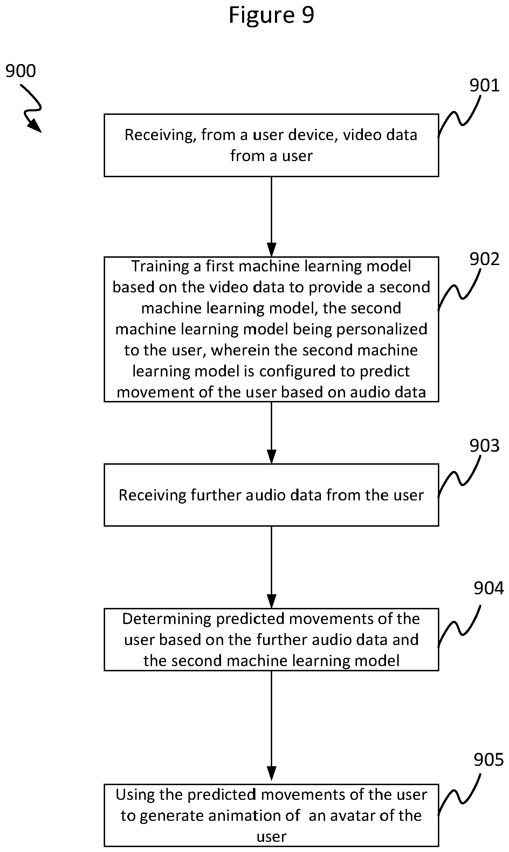

Figure 9 shows an example of a computing device 1100. In some examples, computing device 1100 may have a similar structure as to computing device 106a, computing device 106n, etc. The computing device 1100 may comprises at least one memory 1101, at least one data processing unit 1102, 1103 and an input/output interface 1104. Via the interface the computing device can be coupled to a network such as network 104. The receiver and/or the transmitter may be implemented as a radio front end or a remote radio head, for example. For example, the computing device 1100 or data processing units 1101, 1102 in combination with memory 1101 can be configured to execute an appropriate software code to provide the functions carried out by a computing device as disclosed herein. Computing device 1100 may be connectable to one or more networks such as network 104 to receive and/or transmit information. Such networks may include internet networks for example. In some examples, computing device 1100 may comprise a cloud-implemented device.

Figure 9 shows an example method flow 900. Method flow 900 may be performed: by a user device such as user device 102a; by a computing device such as computing device 106a; by a combination of a user device (e.g., user device 102a) and a computing device (e.g., computing device 106a).

At 901, the method comprises receiving, from a user device, video data from a user. In some examples, this may comprise capturing video data from the user device.

At 902, the method comprises training a first machine learning model based on the video data to provide a second machine learning model. The second machine learning model may be personalized to the user and be configured to predict movement of the user based on audio data. The first machine learning model may comprise a personalizable base model $f_\theta$. The second machine learning model may comprise a personalized model $f'_\theta$ (e.g., model 210).

At 903, method 900 comprises receiving further audio data from the user. The further audio data may be different from the audio data used to train the first machine learning model at 902. The further audio data may also be different from the audio data of the video data received at 901.

At 904, method 900 comprises determining predicted movements of the user based on the further audio data and the second machine learning model.

At 905, method 900 comprises using the predicted movements of the user to generate animation of an avatar of the user.

One or more elements of the systems described above may be controlled by a processor and associated memory comprising computer readable instructions for controlling the system. The processor may control one or more devices for implementing the method disclosed herein. Circuitry or processing systems may also be provided to control one or more systems.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g., a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

According to a first aspect there is provided computer-implemented method comprising: receiving, from a user device, video data from a user; training a first machine learning model based on the video data to provide a second machine learning model, the second machine learning model being personalized to the user, wherein the second machine learning model is configured to predict movement of the user based on audio data; receiving further audio data from the user; determining predicted movements of the user based on the further audio data and the second machine learning model; using the predicted movements of the user to generate animation of an avatar of the user.

According to some examples, the movement of the user comprises: lip movement of the user; changes in head pose of the user; changes in facial expression of the user.

According to some examples, the method comprises communicating with a further user device, wherein the animation of the avatar is used during the communication.

According to some examples, training the first machine learning based on the video data to provide the second machine learning model is performed, at least in part, by a cloud computing device.

According to some examples, training the first machine learning model based on the video data to provide the second machine learning model is performed, at least in part, by the user device.

According to some examples, using the predicted movements of the user to generate animation of the avatar of the user comprises: receiving at least one input from the user varying a degree of at least one of the predicted movements of the user to provide customized movements for the user; using the customized movements for the user to generate animation of the avatar of the user.

According to some examples, the video data comprises more than one video of the user.

According to some examples, the method comprises: generating a first persona of a user based on the predicted movements and based on a first customization of the animation of the avatar from the user; generating a second persona of the user based on at least one of: the predicted movements based on the video data from the user and a second customization of the animation of the avatar from the user; different predicted movements of the user using different video data; different predicted movements of the user using different video data from the user, a third customization of the animation of the avatar from the user; wherein the method comprises: storing the second persona of the user; providing an option to the user to select either first persona of the user or the second persona of the user to provide animation of the avatar.

According to some examples, the method comprises: receiving information from the user editing an appearance of the avatar; updating the avatar based on the received information.

According to some examples, the method comprises: determining a representation having a similar appearance to the user; basing the appearance of the avatar on the representation.

According to some examples, a training dataset comprises two or more videos for each of a plurality of users, each of the videos having at least one labelled vertex of a head of the respective user; the method comprising: i) training a third machine learning model based on one or more videos for a user of the plurality of users to provide a fourth machine learning model; ii) predicting head movements of the user of the plurality of users for one or more portions of audio data; iii) computing, using the at least one labelled vertex of the head, error for the predicted head movements of the user of the plurality of users for one or more portions of audio data; iv) backpropagating the error for the predicted head movements of the user of the plurality of users to update parameters of the third machine learning model; wherein the method comprises: repeating steps i) to iv) for a random sample of the plurality of users until the error has converged from one user to the next user in the sample; and subsequently using the third machine learning model as the first machine learning model.

According to some examples, at least one of the first machine learning model, the second machine learning model, the third machine learning model and the fourth machine learning model comprises: a convolutional and/or a sequential neural network configured to operate on audio data to predict changes in head pose, expression, and lip movements.

According to some examples, training the first machine learning model based on the video data to provide the second machine learning model comprises using one or more few-shot learning techniques.

According to a second aspect, there is provided an apparatus comprising at least one processor; and at least one memory including computer program code, the at least one memory and computer program code configured to, with the at least one processor, cause the apparatus to perform: receiving, from a user device, video data from a user; training a first machine learning model based on the video data to provide a second machine learning model, the second machine learning model being personalized to the user, wherein the second machine learning model is trained to predict movement of the user based on audio data; receiving further audio data from the user; determining predicted movements of the user based on the further audio data and the second machine learning model; using the predicted movements of the user to generate animation of an avatar of the user.

The at least one memory and computer program code configured to, with the at least one processor, cause the apparatus of the second aspect to perform any of the steps of the examples of method of the first aspect.

According to a third aspect, there is provided a computer-readable storage device comprising instructions executable by a processor for: receiving, from a user device, video data from a user; training a first machine learning model based on the video data to provide a second machine learning model, the second machine learning model being personalized to the user, wherein the second machine learning model is able to predict movement of the user based on audio data; receiving further audio data from the user; determining predicted movements of the user based on the further audio data and the second machine learning model; using the predicted movements of the user to generate animation of an avatar of the user.

The instructions executable by a processor of the third aspect may be for performing any of the steps of the examples of the method of the first aspect.

According to a fourth aspect, there is provided computer equipment comprising: memory comprising one or more memory units; and processing apparatus comprising one or more processing units, wherein the memory stores code arranged to run on the processing apparatus, the code being configured so as when on the processing apparatus to perform the method of the first aspect, or any of the examples of the first aspect.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

**Claims**

1.  A computer-implemented method comprising:

    receiving, from a user device, video data from a user;
    training a first machine learning model based on the video data to provide a second machine learning model, the second machine learning model being personalized to the user, wherein the second machine learning model is configured to predict movement of the user based on audio data;
    receiving further audio data from the user;
    determining predicted movements of the user based on the further audio data and the second machine learning model;
    using the predicted movements of the user to generate animation of an avatar of the user.

2.  A method according to claim 1, wherein the movement of the user comprises: lip movement of the user; changes in head pose of the user; changes in facial expression of the user.

3. A method according to claim 1 or claim 2, comprising:
communicating with a further user device, wherein the animation of the avatar is used during the communication.

4. A method according to any preceding claim, wherein training the first machine learning based on the video data to provide the second machine learning model is performed, at least in part, by a cloud computing device.

5. A method according to any preceding claim, wherein training the first machine learning model based on the video data to provide the second machine learning model is performed, at least in part, by the user device.

6. A method according to any preceding claim, wherein using the predicted movements of the user to generate animation of the avatar of the user comprises:

receiving at least one input from the user varying a degree of at least one of the predicted movements of the user to provide customized movements for the user;
using the customized movements for the user to generate animation of the avatar of the user.

7. A method according to any preceding claim, wherein the video data comprises more than one video of the user.

8. A method according to any preceding claim, wherein the method comprises:

generating a first persona of a user based on the predicted movements and based on a first customization of the animation of the avatar from the user;
generating a second persona of the user based on at least one of:

the predicted movements based on the video data from the user and a second customization of the animation of the avatar from the user;
different predicted movements of the user using different video data;
different predicted movements of the user using different video data from the user, a third customization of the animation of the avatar from the user;
wherein the method comprises:

storing the second persona of the user;
providing an option to the user to select either first persona of the user or the second persona of the user to provide animation of the avatar.

9. A method according to any preceding claim, comprising:

receiving information from the user editing an appearance of the avatar;
updating the avatar based on the received information.

10. A method according to any preceding claim, wherein the method comprises:

determining a representation having a similar appearance to the user;
basing the appearance of the avatar on the representation.

11. A method according to any preceding claim, wherein a training dataset comprises two or more videos for each of a plurality of users, each of the videos having at least one labelled vertex of a head of the respective user; the method comprising:

i) training a third machine learning model based on one or more videos for a user of the plurality of users to provide a fourth machine learning model;
ii) predicting head movements of the user of the plurality of users for one or more portions of audio data;
iii) computing, using the at least one labelled vertex of the head, error for the predicted head movements of the user of the plurality of users for one or more portions of audio data;
iv) backpropagating the error for the predicted head movements of the user of the plurality of users to update parameters of the third machine learning model;

wherein the method comprises: repeating steps i) to iv) for a random sample of the plurality of users until the error has converged from one user to the next user in the sample; and

subsequently using the third machine learning model as the first machine learning model.

**12.** A method according to any preceding claim, wherein at least one of the first machine learning model, the second machine learning model, the third machine learning model and the fourth machine learning model comprises: a convolutional and/or a sequential neural network configured to operate on audio data to predict changes in head pose, expression, and lip movements.

**13.** A method according to any preceding claim, wherein training the first machine learning model based on the video data to provide the second machine learning model comprises using one or more few-shot learning techniques.

**14.** An apparatus comprising:

at least one processor; and
at least one memory including computer program code, the at least one memory and computer program code configured to, with the at least one processor, cause the apparatus to perform:

receiving, from a user device, video data from a user;
training a first machine learning model based on the video data to provide a second machine learning model, the second machine learning model being personalized to the user, wherein the second machine learning model is trained to predict movement of the user based on audio data;
receiving further audio data from the user;
determining predicted movements of the user based on the further audio data and the second machine learning model;
using the predicted movements of the user to generate animation of an avatar of the user.

**15.** A computer-readable storage device comprising instructions executable by a processor for:

receiving, from a user device, video data from a user;
training a first machine learning model based on the video data to provide a second machine learning model, the second machine learning model being personalized to the user, wherein the second machine learning model is able to predict movement of the user based on audio data;
receiving further audio data from the user;
determining predicted movements of the user based on the further audio data and the second machine learning model;
using the predicted movements of the user to generate animation of an avatar of the user.

# Figure 1

## Figure 2A

200

203
205a    205b

207a    207b    207c
221
1)    2)    3)

| Video 1 + head vertices | Video 2 + head vertices |
|---|---|
| Video 3 + head vertices | Video 4 + head vertices |

205c    205d

209

$g_\theta$

211

$g'_\theta$

213c

213b

Predicted head movements for 1)    Predicted head movements for 2)    Predicted head movements for 3)

213a

215 — Compute error/loss on head movements using true head vertices

217 — Backpropogate loss and update parameters in original model $g_\theta$

219 — Repeat over randomly sampled users to provide model $f_\theta$

# Figure 2B

201

| User Audio and Image data | $f_\theta$ → | Personalized ML Model $f'_\theta$ |
|---|---|---|

208

221

210

Mesh

212

# Figure 3

300

210

Audio data → Personalized ML Model $f'_\theta$ →

314

318

Lip movement + Expression + Head pose

320

Face animation

322

324

# Figure 4

102a        106a        102n

Access personalizable base model $f_\theta$    430

Receive video data for a user    432      434

Personalize base model $f_\theta$ to the user to provide personalized model $f'_\theta$

User customization of $f'_\theta$

User elects to user avatar    435

Receive audio data    436      438

Use audio data and personalized model $f'_\theta$ to animate avatar

Avatar selected for use    440

Use animated avatar during communication

442

# Figure 5

## Figure 6

664

666a

600

662a

666b

668

662b

666c

662c

Input

Layer 1 nodes

Output

# Figure 7

Figure 8

# Figure 9

900

901

Receiving, from a user device, video data from a user

902

Training a first machine learning model based on the video data to provide a second machine learning model, the second machine learning model being personalized to the user, wherein the second machine learning model is configured to predict movement of the user based on audio data

903

Receiving further audio data from the user

904

Determining predicted movements of the user based on the further audio data and the second machine learning model

905

Using the predicted movements of the user to generate animation of an avatar of the user

Europäisches
Patentamt
European
Patent Office
Office européen
des brevets

# EUROPEAN SEARCH REPORT

**Application Number**

EP 22 15 4373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/302184 A1 (LEMPITSKY VICTOR SERGEEVICH [RU] ET AL) 24 September 2020 (2020-09-24) * figure 4 * * paragraph [0002] - paragraph [0010] * * paragraph [0031] - paragraph [0109] * * paragraph [0138] - paragraph [0140] * ----- | 1-15 | INV. G06T13/40 G10L21/00 |
| X | US 2021/056348 A1 (BERLIN CODY GUSTAVE [US] ET AL) 25 February 2021 (2021-02-25) * figures 2B, 7-10 * * paragraphs [0005], [0006], [0009] * * paragraphs [0041], [0067] * * paragraph [0108] - paragraph [0145] * ----- | 1-15 | |
| X | WO 2021/155140 A1 (GOOGLE LLC [US]) 5 August 2021 (2021-08-05) * figures 1A, 1B, 3A-5A * * paragraphs [0002], [0008] * * paragraph [0022] - paragraph [0042] * * paragraph [0062] - paragraph [0068] * * paragraph [0094] * * paragraph [0116] - paragraph [0145] * * paragraph [0153] * ----- | 1-15 | TECHNICAL FIELDS SEARCHED (IPC) G06T G10L |
| A | DANIEL CUDEIRO ET AL: "Capture, Learning, and Synthesis of 3D Speaking Styles", ARXIV.ORG, CORNELL UNIVERSITY LIBRARY, 201 OLIN LIBRARY CORNELL UNIVERSITY ITHACA, NY 14853, 8 May 2019 (2019-05-08), XP081270322, * the whole document * ----- -/-- | 1-15 | |

The present search report has been drawn up for all claims

| Place of search | Date of completion of the search | Examiner |
|---|---|---|
| Berlin | 30 June 2022 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br>EP 22 15 4373 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/122411 A1 (SACHS IAN [US] ET AL) 25 April 2019 (2019-04-25)<br>* figure 1 *<br>* paragraphs [0012], [0013] *<br>* paragraph [0080] – paragraph [0086] *<br>* paragraph [0121] – paragraph [0151] *<br>* paragraph [0178] *<br>----- | 1-15 | |
| A | US 10 755 463 B1 (ALBUZ ELIF [US] ET AL) 25 August 2020 (2020-08-25)<br>* figures 4-6D *<br>* column 1, line 30 – line 44 *<br>* column 3, line 43 – line 57 *<br>* column 11, line 29 – column 13, line 28 *<br>----- | 1-15 | |

**TECHNICAL FIELDS SEARCHED (IPC)**

The present search report has been drawn up for all claims

| Place of search | Date of completion of the search | Examiner |
|---|---|---|
| Berlin | 30 June 2022 | Höller, Helmut |

## ANNEX TO THE EUROPEAN SEARCH REPORT
## ON EUROPEAN PATENT APPLICATION NO.

EP 22 15 4373

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | Publication date | Patent family member(s) | | Publication date |
|---|---|---|---|---|---|
| US 2020302184 | A1 | 24-09-2020 | US | 2020302184 A1 | 24-09-2020 |
| | | | WO | 2020190083 A1 | 24-09-2020 |
| US 2021056348 | A1 | 25-02-2021 | US | 2021056348 A1 | 25-02-2021 |
| | | | US | 2021334595 A1 | 28-10-2021 |
| WO 2021155140 | A1 | 05-08-2021 | NONE | | |
| US 2019122411 | A1 | 25-04-2019 | NONE | | |
| US 10755463 | B1 | 25-08-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11127225 B1

**Non-patent literature cited in the description**

- **YOSINSKI et al.** How transferable are features in neural networks?. *CoRR abs/1411.1792,* 2014, https://arxiv.org/abs/1411.1792
- **FINN et al.** Model-Agnostic Meta-Learning for Fast Adaptation of Deep Networks. *Proceedings of the 34th International Conference on Machine Learning, PMLR,* 2017, vol. 70, 1126-1135
- **SNELL et al.** *ProtoNets such as those described in Prototypical Networks for Few-shot Learning,* 19 June 2017
- **REQUIEMA et al.** CNAPs such as those described in Fast and Flexible Multi-Task Classification Using Conditional Neural Adaptive Processes. *Advances in Neural Information Processing Systems,* 2019, vol. 32, 7957-7968